# EUROPÄISCHE PATENTSCHRIFT

(11) **EP 0 862 130 B1**
(45) Veröffentlichungstag und Bekanntmachung des Hinweises auf die Patenterteilung: **22.07.2009**
(21) Anmeldenummer: 98103461.4
(22) Anmeldetag: 27.02.1998
(51) Int. Cl.: G06K 7/00

(54) **Chipkartenleser mit einem Kartenanwesenheitsschalter**
Chip card reader with card presence detection switch
Lecteur de carte à puce à commutateur de détection de la présence d'une carte

(30) Priorität: 28.02.1997 DE 19708221
(43) Veröffentlichungstag der Anmeldung: 02.09.1998
(73) Patentinhaber: Amphenol-Tuchel Electronics GmbH, 74080 Heilbronn (DE)
(72) Erfinder: Reichardt, Manfred, 74189 Weinsberg (DE); Schuder, Bernd, 74193 Schwaigern (DE)
(74) Vertreter: Wagner, Karl H.

(56) Entgegenhaltungen:
- WO-A-95/33243
- DE-A1- 4 212 150

## Beschreibung

Die Erfindung bezieht sich auf ein Chipkartenlesegerät, d. h. eine Kontaktiervorrichtung mit Lesekontakten, die mit Kontaktflächen auf einer Chipkarte in Kontakteingriff zu bringen sind.

Die EP 0 316 699 zeigt den Rahmen eines Chipkartenlesers, bei dem ein Schalterkontakte aufweisender Endlagenschalter am die Lesekontakte tragenden Rahmen befestigt ist. Ferner ist aus der DE 42 12 150 A1 ein Chipkartenleser mit einem Endlagenschalter bekannt, bei dem ebenfalls sowohl die Lesekontakte als auch die Schalterkontakte eines Endlagenschalters in einem Rahmen angeordnet sind.

Die Anbringung der Schalterkontakte in dem auch die Lesekontakte tragenden Rahmen hat Nachteile, insbesondere auch bei der Montage. Wenn die Schalterkontakte beispielsweise durch Einrasten im Rahmen befestigt werden, ergeben sich bedingt durch die Bauhöhe des Rahmens und durch die Dicke der Karte Einschränkungen insbesondere auch in sofern, als sich beim Einsetzen der Schalterkontakte nur kurze Führungen ergeben, was eine präzise Halterung der Schalterkontakte nicht fördert. Schwierigkeiten ergeben sich auch bei der Montage von seitlich in den Rahmen einsetzbaren oder einspritzbaren Lesekontakten wegen der im Rahmen vorhandenden Schalterkontakte. Dies verursacht höhere Kosten bei der Herstellung des Chipkartenlesers.

Der Erfindung liegt die Aufgabe zugrunde, die Nachteile des Standes der Technik zu vermeiden. Insbesondere hat sich die Erfindung die Aufgabe gestellt, einen kostengünstigen Chipkartenleser vorzusehen, der eine einfachere Montage des Lesers insgesamt ermöglicht.

Zur Lösung dieser Aufgabe ist ein Chipkartenleser nach Anspruch 1 vorgesehen. Rahmen und Deckel können auf diese Weise parallel bestückt werden, was die Montage verkürzt und erleichtert. Dadurch ergeben sich geringere Kosten. Darüberhinaus ist eine seitliche Montage der Lesekontakte Im Rahmen leicht zu realisieren.

Bevorzugte Ausgestaltungen der Erfindung ergeben sich aus den Unteransprüchen.

Obwohl die Erfindung vorzugsweise bei einem Chipkartenleser der Bauart mit einem Rahmen und einem Deckel angewandt wird, ist es auch denkbar, die erfindungsgemäßen Maßnahmen bei einem Chipkartenleser der Bauart vorzusehen, wo ein absenkbarer die Lesekontakte tragender Schlitten vorgesehen ist.

Weitere Vorteile, Ziele und Einzelheiten der Erfindung ergeben sich aus der Beschreibung von Ausführungsbeispielen anhand der Zeichnung; in der Zeichnung zeigt:
- Fig. 1: eine Draufsicht auf einen Lesekontakte tragenden Rahmen;
- Fig. 2: eine Draufsicht auf einen Deckel, der auf den Rahmen gemäß Fig. 1, wie im Schnitt der Fig. 4 gezeigt, aufgesetzt und mit diesem verbunden, beispielsweise verrastet werden kann, wobei im Deckel ein Endlagenschalter angeordnet ist;
- Fig. 3: eine Einzelheit der Draufsicht gemäß Fig. 2 im Bereich des Endlagenschalters;
- Fig. 4: einen Schnitt im wesentlichen längs Linie IV-IV in Fig. 2;
- Fig. 5: einen Schnitt längs Linie V-V in Fig. 4;
- Fig. 6: einen Schnitt längs Linie VI-VI in Fig. 1 und 2 zur Darstellung der Verrastung des Deckels mit dem Rahmen, wobei der Deckel auf dem Rahmen liegend zu denken ist;
- Fig. 7: einen Schnitt längs Linie VII-VII in Fig. 2;
- Fig. 8: einen Schnitt durch den die Lesekontakte tragenden Rahmen bei einem Chipkartenleser gemäß dem Stand der Technik, wobei der Endlagenschalter, von dem hier einer der Schalterkontakte dargestellt ist, im Rahmen angeordnet und gehaltert ist;
- Fig. 9: eine Seitenansicht des Deckels aus Richtung des Pfeils A in Fig. 2; und
- Fig. 10: einen Schnitt längs Linie X-X in Fig. 1.

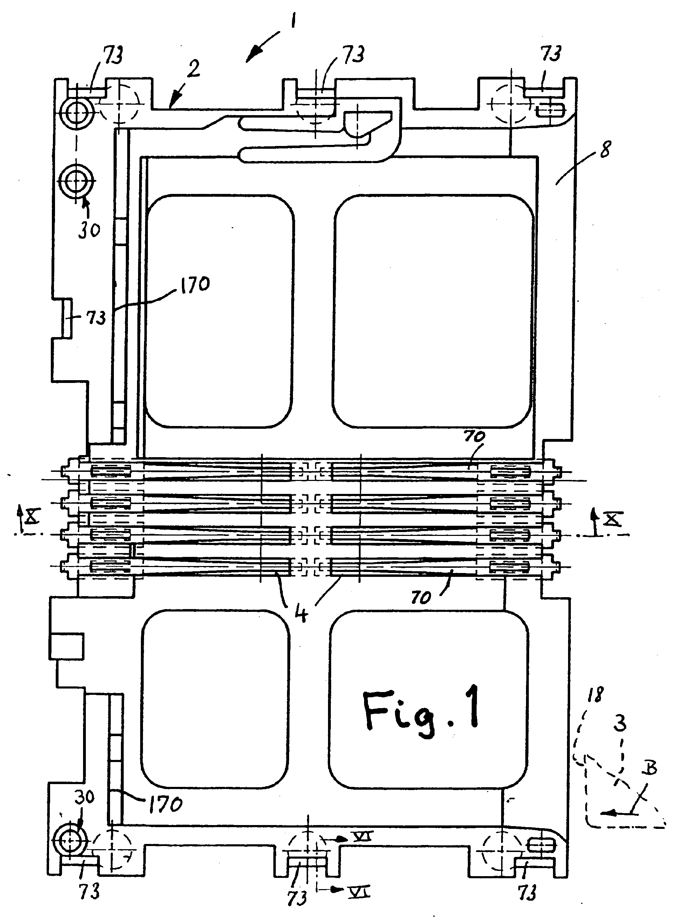

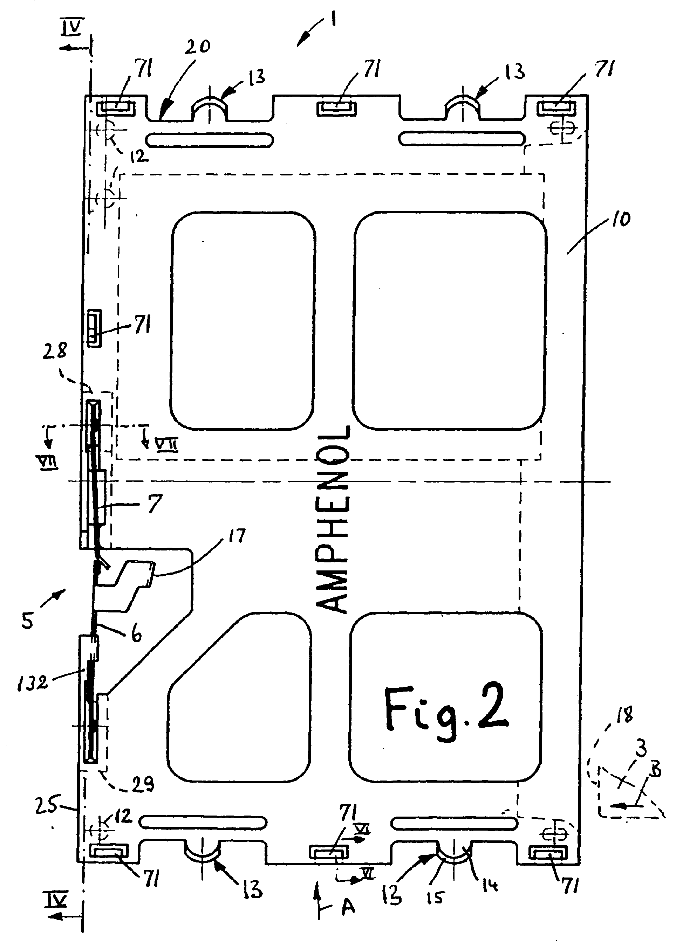

Im folgenden wird anhand der Fig. 1 bis 7 sowie 9 und 10 ein Ausführungsbeispiel eines Chipkartenlesers (Chipkarten-Kontaktiergerät) 1 beschrieben. Der Chipkartenleser 1 besteht im wesentlichen aus einem in Fig. 1 gezeigten Rahmen (allgemein Kontaktträger) 2 und einem in Fig. 2 gezeigten Deckel 20. Die Chipkarte 3 ist gestrichelt in Fig. 1 und 2 gezeigt und ein Pfeil B deutet an, in welcher Richtung die Chipkarte 3 in den Chipkartenleser 1 eingesetzt wird.

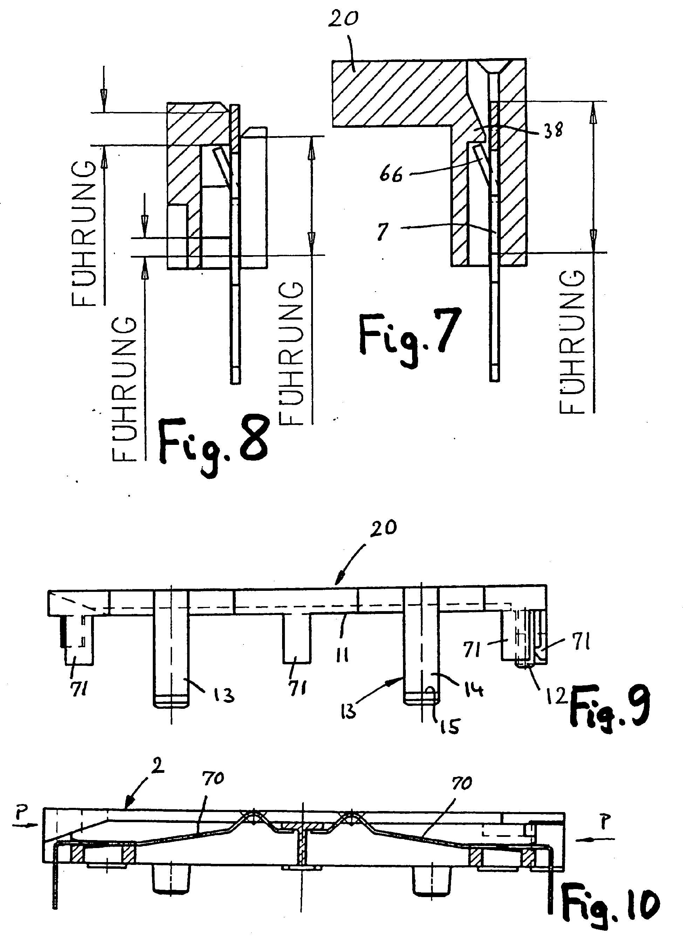

In Fig. 1 erkennt man, daß der Rahmen 2 mehrere Öffnungen 30 (nicht alle Öffnungen und Ausnehmungen sind bezeichnet) aufweist, die dazu dienen, Führungselemente (Stifte 12 in Fig. 2, 4 und 9) des noch zu beschreibenden Deckels 20 aufzunehmen. Ferner sind im Rahmen 2 Ausnehmungen 4 vorgesehen, in die Lesekontakte (Lesekontaktelemente) 70 (vgl. Fig. 10) eingesetzt sind. Die Lesekontakte 70 dienen wie bekannt zur Kontaktierung der Kontaktflächen der Chipkarte. Weitere Einzelheiten zeigt Fig. 10.

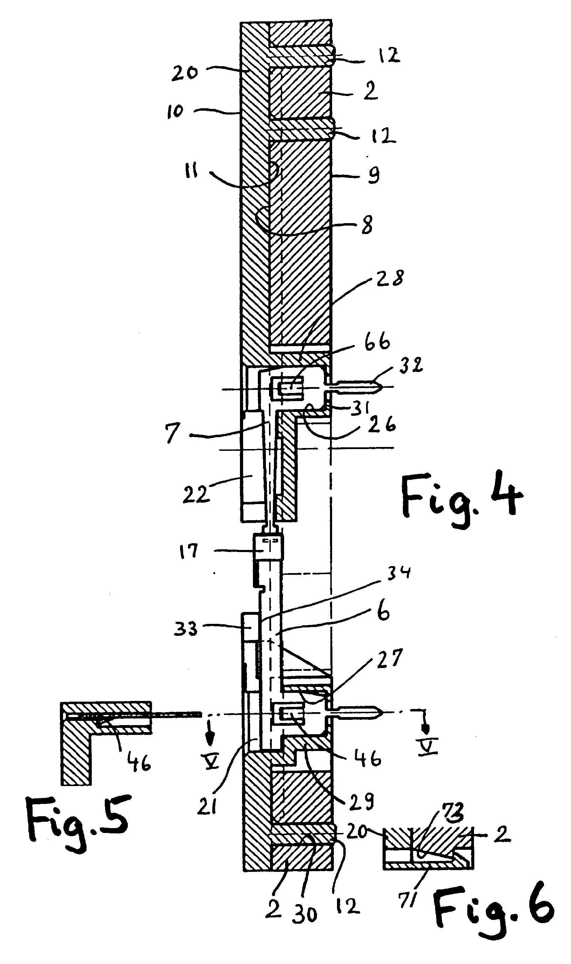

Der Rahmen 2 weist ferner eine Oberseite 8 sowie eine mit 9 in Fig. 4 bezeichnete Unterseite auf.

Fig. 2 zeigt den Deckel 20, der eine Oberseite 10 und eine in Fig. 4 zu sehende Unterseite 11 aufweist. Zur Herstellung des kompletten Chipkartenlesers 1 wird, wie in Fig. 4 gezeigt, der Deckel 20 auf den Rahmen 2 gesetzt und mit diesem verbunden, beispielweise verrastet. Dies wird weiter unten unter Bezugnahme auf Fig. 6 und 8 beschrieben. Die Unterseite 11 des Deckels 20 liegt dann auf entsprechenden Auflageflächen der Oberseite 8 des Rahmens 2 auf, wobei ein das Einschieben der Karte 3 ermöglichender Schlitz vorgesehen ist.

Erfindungsgemäß ist nun ein an sich bekannter Endlagenschalter 5 im Deckel 20 und nicht im Rahmen 2 angeordnet.

Ferner sind am Deckel 20 Rast- und Führungselemente 13 (Fig. 2) ausgeformt, die ebenfalls von der Unterseite 11 wegragen. Die Rast- und Führungselemente 13 weisen stiftartige Verlängerungen 14 (Fig. 9) auf, an deren unteren Enden Rastvorsprünge 15 ausgebildet sind, die mit entsprechenden Rastflächen beispielsweise einer Schaltungsplatte (nicht gezeigt) dann zusammenwirken, wenn die Unterseite 11 des Deckels auf der Oberseite einer solchen Schaltungsplatte aufliegt, um den Chipkartenleser 1 daran zu befestigen.

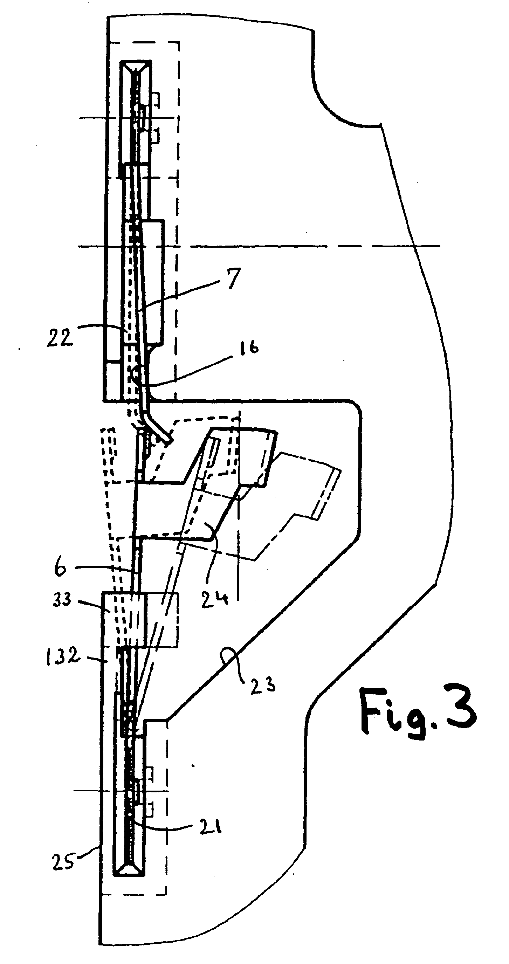

Speziell unter Bezugnahme auf die Fig. 3 bis 5 sei nunmehr der erfindungsgemäße im Deckel 20 angeordnete Endlagenschalter 5 erläutert.

Der Endlagenschalter 5 weist zwei Schalterkontakte (Schalterkontaktelemente, kurz: Schaltkontakte) 6 und 7 auf. Der Schalterkontakt 6 kann aus der in Fig. 3 mit ausgezogenen Linien gezeigten Position durch die Chipkarte 3 bei deren Einschieben in den Chipkartenleser 1 in die gestrichelt gezeigte Position verschoben werden, wobei sich dabei der Schaltkontakt 6 vom Schaltkontakt 7 abhebt und dabei den Schaltkontakt 7 geringfügig von einer vom Deckel 20 gebildeten Anlagefläche 16 abhebt. In der in Fig. 3 ausgezogen dargestellten Stellung des Schaltkontaktes 6 ist dieser vorzugsweise vorgespannt und drückt mit seiner Kraft den Schaltkontakt 7 gegen die Anlagefläche 16.

Der Endlagenschalter 5 ist, wie man in Fig. 2 erkennt, im in Karteneinsteckrichtung hinteren Bereich des Deckels 20 derart vorgesehen, daß eine Anlagefläche 17 des Schaltkontakts 6 in den Bereich hineinragt, wo sich die Chipkarte 3 auf ihre Endlage an der Anlagefläche 170 (vgl. Fig. 1) hinbewegt. Im letzten Teil der Einsetzbewegung der Karte 3 trifft diese dann mit ihrer Vorderkante 18 auf die Anlagefläche 17 und bewegt den Schalterkontakt 6 in die in Fig. 3 gestrichelt dargestellte Öffnungsposition. Der Endlagenschalter 5 ist also ein sogenannter "Öffner", d. h. ein Schalter, der bei Betätigung durch die Karte 3 öffnet. Es ist auch denkbar, den Endlagenschalter 5 als einen "Schließer" auszubilden, d. h. einen Schalter, bei dem durch die Bewegung der Karte 3 in ihre Endlage der Schalter 5 geschlossen wird.

Ebenso wie die Lesekontakte 70 des Rahmens 2, so könnten auch die Schalterkontakte 6 und 7 im Deckel eingespritzt sein, dann, wenn Rahmen bzw. Deckel durch Spritzguß aus einem Kunststoff hergestellt werden. Vorzugsweise werden, wie beim gezeigten Ausführungsbeispiel zu sehen, für den Endlagenschalter 5 Kontaktkammern 21, 22 im Kunststoff des Deckels 20 beim Spritzen hergestellt. Diese Kontaktkammern oder Schlitze sind Fig. 4 mit 21 für den Schalterkontakt 6 und mit 22 für den Schalterkontakt 7 bezeichnet. Diese Kontaktkammern 21, 22 befinden sich benachbart zu einer Ausnehmung 23, die einen Ausschnitt für den die Anlagefläche 17 tragenden Betätigungsarm 24 des Schalterkontakts 6 bildet. Auch die freien Enden des Schalterkontakts 6 und des Schalterkontakts 7 ragen in diese Ausnehmung 23 hinein.

Die Kontaktkammern 21 und 22 erstrecken sich im Wesentlichen parallel zur Hinterkante 25 des Deckels 20. Die Kammer 22 weist (vgl. Fig. 4) eine sich senkrecht dazu erstreckende Erweiterung 26 auf, die in einem blockartigen Vorsprung 28 des Deckels 20 ausgebildet ist. Durch den Boden 31 der Erweiterung 26 verläuft der Anschluß 32 des Schalterkontakts 7. Eine Rastzunge 66 des Schalterkontakts 7 kann mit der Wand der Kammer 26 in Eingriff kommen, um den Schalterkontakt 7 in der Fig. 4 gezeigten Stellung zu halten. Vgl. dazu auch Fig. 7

Ähnlich wie der Schalterkontakt 7 weist auch der Schalterkontakt 6 einen sich senkrecht zur Längserstreckung des Schalterkontakts 6 erstreckenden Kontaktteil auf, der in einer Erweiterung 27 der Kammer 21 sitzt und mit der Kammerwand durch eine Rastzunge 46 verrastet ist. Die Erweiterung 27 ist in einem blockartigen Vorsprung 29 ausgebildet, der sich wie auch der Vorsprung 28 von der Unterseite 11 des Deckels 20 wegerstreckt.

Die Kontaktkammer 21 für den Schalterkontakt 6 endet an der Ausnehmung 23, wobei die eine Wand der Kammer 21 verlängert ist und einen Arm 132 (Fig. 3) bildet, der parallel zu dem der Schalterkontakt 6 verläuft. Am Ende des Arms 132 bildet der Arm eine Verbreiterung 33, die in die Ausnehmung 23 hineinragt. Die in Fig. 4 zu erkennende Unterseite 34 der Verbreiterung 33 bildet eine Anlagefläche für die entsprechende Kante des Schalterkontakts 6, auch bei dessen Bewegung von der mit ausgezogenen Linien in Fig. 3 gezeigten Ruhestellung in die in Fig. 3 gestrichelt gezeigte Öffnungs- oder Betätigungsstellung.

Jetzt sei nochmals kurz auf die bevorzugten Mittel zur Befestigung des Deckels 20 am Rahmen 2 eingegangen. Am Deckel 20 sind die erwähnten von dessen Unterseite 11 wegragende Führungsstifte 12 (Fig. 4) vorzugsweise zusammen mit dem Deckel 20 aus Kunststoff gespritzt angeordnet.

Diese Stifte 12 sind in entsprechende Öffnungen 30 im Rahmen 2 einsetzbar, wie in Fig. 4 gezeigt. Dies ermöglicht eine präzise Positionierung des Endlagenschalters 5 im betriebsfertigen Chipkartenleser 1. Die Festlegung des Deckels 20 am Rahmen 12 erfolgt vorzugsweise durch Verrastung.

Fig. 7 zeigt eine Einzelheit der Verrastung des Schalterkontakts 7 mit seiner Rastzunge 66 hinter einem Vorsprung 38 des Deckels 20. Zum Vergleich dient die Fig. 8, die die weniger vorteilhafte Verrastung eines Schalterkontaktes beim Stand der Technik zeigt.

Fig. 6 zeigt die Verrastung des Deckels 20 mit dem Rahmen 2 im Einzelnen. Zu diesem Zweck sind am Deckel 20 mehrere Rasthaken 71 vorgesehen. Der Rasthaken 71 kann mit einer Rastfläche (nicht bezeichnet in Fig. 6) am Rahmen 2 in Eingriff kommen und zwar geführt über eine Schrägfläche 73 (vgl. Fig. 1 und 6).

Fig. 10 zeigt die im Rahmen 2 verrasteten Lesekontakte 70. Bei der hier gezeigten Rahmenkonstruktion sind die Lesekontakte 70 in Fig. 1 nicht von oben her sondern von den Seiten her in Richtung der Pfeile P in Fig. 10 in den Rahmen eingesetzt. Dieses seitliche Einsetzen (oder auch Einspritzen) der Lesekontakte 70 kann dank des im Deckel 20 liegenden Endlagenschalters 5 leicht und kostengünstig erfolgen.

Es sei bemerkt, daß die Ziele und Vorteile der Erfindung erreicht werden können durch jegliche Verbesserungen, Veränderungen und Modifikationen, die durch die nachfolgende Zusammenfassung der Erfindung und die Ansprüche abgedeckt werden.

## Patentansprüche

1. Chipkartenleser mit einem Lesekontakte (70) tragenden Kontaktträger (2), mit einem am Kontaktträger (2) befestigbaren Deckel (20) und mit einem Endlagenschalter (5), **dadurch gekennzeichnet, daß** der Endlagenschalter (5) im Deckel (20) angeordnet ist, und zwar in Kontaktkammern (21, 22) die Erweiterungen (26, 27) aufweisen, die in blockartigen Vorsprüngen (28, 29) ausgebildet sind, welche von der Unterseite (11) des Deckels (20) wegragen.

2. Chipkartenleser nach Anspruch 1, **dadurch gekennzeichnet, daß** der Endlagenschalter (5) zwei Schalterkontakte (6, 7) aufweist.

3. Chipkartenleser nach einem der vorhergehenden Ansprüche, **dadurch gekennzeichnet, daß** die Schalterkontakte in den Deckel (20) eingesetzt bzw. eingespritzt sind.

4. Chipkartenleser nach einem der vorhergehenden Ansprüche, **dadurch gekennzeichnet, daß** die Schalterkontakte (6, 7) von oben her in den Deckel (20) eingesetzt sind.

5. Chipkartenleser nach einem der vorhergehenden Ansprüche, **dadurch gekennzeichnet, daß** Kontaktkammern (21, 22) in die die Schalterkontakte eingesetzt sind, benachbart zu einer hinteren Kante (25) des Deckels parallel dazu verlaufend, vorgesehen sind.

6. Chipkartenleser nach einem der vorhergehenden Ansprüche, **dadurch gekennzeichnet, daß** die Kontaktkammern (21, 22) durch eine im Deckel (20) ausgebildete Ausnehmung (23) voneinander getrennt sind.

7. Chipkartenleser nach Anspruch 6, **dadurch gekennzeichnet, daß** die Ausnehmung (23) mindestens eine der in die Ausnehmung hineinragenden Schalterkontakte entsprechende Größe besitzt.

8. Chipkartenleser nach einem der vorhergehenden Ansprüche, **dadurch gekennzeichnet, daß** die Kontaktkammern (21, 22) eine verbesserte Führung beim Einsetzen der Schalterkontakte (6, 7) vorsehen.

9. Chipkartenleser nach einem der vorhergehenden Ansprüche, **dadurch gekennzeichnet, daß** die Kontaktkammern (21, 22) die Schalterkontakte (6, 7) höhenmäßig vollständig aufnehmen.

10. Chipkartenleser nach einem der vorhergehenden Ansprüche, **dadurch gekennzeichnet, daß** die Schalterkontakte (6, 7) jeweils mit Vorsprüngen (38) des Deckels (20) im eingesetzten Zustand verrastet sind (Fig. 7).

11. Chipkartenleser nach einem der vorhergehenden Ansprüche, **dadurch gekennzeichnet, daß** mindestens eine der Kontaktkammern (21) eine Verlängerung durch einen Arm (132) erfährt, der an seinem freien Ende eine Verbreiterung (33) besitzt, die an ihrer Unterseite (34) eine Führung für den Schalterkontakt (6) vorsieht.

12. Chipkartenleser nach einem der vorhergehenden Ansprüche, **dadurch gekennzeichnet, daß** der Deckel (20) Führungsmittel (12) aufweist, die mit Gegenführungsmitteln am Kontaktträger (2) zusammenarbeiten.

13. Chipkartenleser nach einem der vorhergehenden Ansprüche, **dadurch gekennzeichnet, daß** der Deckel (20) Befestigungsmittel (13) aufweist, die mit Gegenbefestigungsmitteln eines Geräts, z.B. einer Schaltungsplatte, zusammenarbeiten.

14. Chipkartenleser nach einem der vorhergehenden Ansprüche, **dadurch gekennzeichnet, daß** der Deckel Führungs- und Befestigunsgmittel (13) aufweist, die mit Gegen-Führungs- und Befestigungsmitteln am Kontaktträger zusammenarbeiten.

15. Chipkartenleser nach einem der vorhergehenden Ansprüche, **dadurch gekennzeichnet, daß** der Kontaktträger ein Rahmen ist.

16. Chipkartenleser nach einem der vorhergehenden Ansprüche, **dadurch gekennzeichnet, daß** am Deckel (20) Rasthaken (71) geformt sind, die mit Rastflächen am Kontaktträger (2) zusammenarbeiten.

17. Chipkartenleser nach einem der vorhergehenden Ansprüche, **dadurch gekennzeichnet, daß** der Kontaktträger (2) von den Seiten des Kontaktträgers zugängliche Kontaktkammern aufweist, in die Lesekontakte einsetzbar sind.

## Claims

1. A chip card reader comprising a contact support (2) carrying reading contacts (70), a cover (20) fixable at the contact support (2) and a limiting switch (5), **characterized in that** the limiting switch (5) is located in the cover (20) in contact chambers (21, 22) which comprise extensions (26, 27) which are formed in block-like projections (28, 29) that project away from the underside (11) of the cover (20).

2. The chip card reader of claim 1**, characterized in that** the limiting switch (5) comprises two switch contacts (6, 7).

3. The chip card reader of any one of the preceding claims, **characterized in that** the switch contacts are inserted or injection molded into the cover (20).

4. The chip card reader of any one of the preceding claims**, characterized in that** the switch contacts (6, 7) are inserted into the cover (20) from above.

5. The chip card reader of any one of the preceding claims, **characterized in that** contact chambers (21, 22) into which the switch contacts are inserted and are located adjacent to a rear edge (25) of the cover and extend parallel thereto.

6. The chip card reader of any one of the preceding claims, **characterized in that** the contact chambers (21, 22) are separated from one another by a cut-out (23) formed in the cover.

7. The chip card reader of any one of the preceding claims, **characterized in that** the cut-out (23) has at least a size which corresponds to a switch contacts, which project into the cut-out.

8. The chip card reader of any one of the preceding claims, **characterized in that** the contact chambers (21, 22) provide for an improved guidance during the insertion of the switch contacts (6, 7).

9. The chip card reader of any one of the preceding claims, **characterized in that** the contact chambers (21, 22) accept the entire height of the switch contacts (6, 7).

10. The chip card reader of any one of the preceding claims, **characterized in that** each of the switch contacts (6, 7), in their inserted conditions, are snapped together with projections (38) of the cover (20) (Fig. 7).

11. The chip card reader of any one of the preceding claims, **characterized in that** at least one of the contact chambers (21) is subject to an extension by an arm (132) that comprises a broadening (33) at its free end that provides at its lower surface (34), guidance for the switch contact (6).

12. The chip card reader of any one of the preceding claims, **characterized in that** the cover (20) comprises guide means (12) that cooperate with opposite guide means on the contact support (2).

13. The chip card reader of any one of the preceding claims, **characterized in that** the cover (20) comprises fixing means (13) that cooperate with the opposite fixing means of a device, i.e. a circuit board.

14. The chip card reader of any one of the preceding claims, **characterized in that** the cover comprises guide and fixing means (13) that cooperate with the opposite guide and fixing means on the contact support.

15. The chip card reader of any one of the preceding claims, **characterized in that** the contact support is a frame.

16. The chip card reader of any one of the preceding claims, **characterized in that** snap hooks (170) are formed on the cover (20) which cooperate with snap surfaces (71) on the contact support (2).

17. The chip card reader of any one of the preceding claims, **characterized in that** the contact support (2) comprises contact chambers accessible from the sides of the frame into which the reading contacts are insertable.

## Revendications

1. Lecteur de carte à puce comprenant un support de contacts (2) portant des contacts de lecture (70), un couvercle (20) fixable au niveau du support de contacts (2) et un commutateur de limitation (5), **caractérisé en ce que** le commutateur de limitation (5) est situé dans le couvercle (20) dans des chambres de contact (21, 22) qui comprennent des extensions (26, 27) qui sont formées dans des saillies en forme de bloc (28, 29) qui font saillie à partir du côté inférieur (11) du couvercle (20).

2. Lecteur de carte à puce selon la revendication 1, **caractérisé en ce que** le commutateur de limitation (5) comprend deux contacts de commutateur (6, 7).

3. Lecteur de carte à puce selon l'une quelconque des revendications précédentes, **caractérisé en ce que** les contacts de commutateur sont insérés ou moulés par injection dans le couvercle (20).

4. Lecteur de carte à puce selon l'une quelconque des revendications précédentes, **caractérisé en ce que** les contacts de commutateur (6, 7) sont insérés dans le couvercle (20) par le dessus.

5. Lecteur de carte à puce selon l'une quelconque des revendications précédentes, **caractérisé en ce que** les chambres de contact (21, 22) dans lesquelles les contacts de commutateur sont insérés sont placées à côté d'un bord arrière (25) du couvercle et s'étendent parallèlement à celui-ci.

6. Lecteur de carte à puce selon l'une quelconque des revendications précédentes, **caractérisé en ce que** les chambres de contact (21, 22) sont séparées entre elles par une découpe (23) formée dans le couvercle.

7. Lecteur de carte à puce selon l'une quelconque des revendications précédentes, **caractérisé en ce que** la découpe (23) a au moins une taille qui correspond à un contact de commutateur, qui fait saillie dans la découpe.

8. Lecteur de carte à puce selon l'une quelconque des revendications précédentes, **caractérisé en ce que** les chambres de contact (21, 22) assurent en guidage amélioré pendant l'insertion des contacts de commutateur (6, 7).

9. Lecteur de carte à puce selon l'une quelconque des revendications précédentes, **caractérisé en ce que** les chambres de contact (21, 22) acceptent la hauteur entière des contacts de commutateur (6, 7).

10. Lecteur de carte à puce selon l'une quelconque des revendications précédentes, **caractérisé en ce que** tous les contacts de commutateur (6, 7), dans leurs états insérés, sont encliquetés avec des saillies (38) du couvercle (20) (Figure 7).

11. Lecteur de carte à puce selon l'une quelconque des revendications précédentes, **caractérisé en ce qu'**au moins une des chambres de contact (21) est soumise à une extension par un bras (132) qui comprend un élargissement (33) au niveau de son extrémité libre qui assure, au niveau de sa surface inférieure (34), un guidage pour le contact de commutateur (6).

12. Lecteur de carte à puce selon l'une quelconque des revendications précédentes, **caractérisé en ce que** le couvercle (20) comprend des moyens de guidage (12) qui coopèrent avec des moyens de guidage opposés sur le support de contacts (2).

13. Lecteur de carte à puce selon l'une quelconque des revendications précédentes, **caractérisé en ce que** le couvercle (20) comprend des moyens de fixation (13) qui coopèrent avec les moyens de fixation opposés d'un dispositif, c'est-à-dire une carte de circuit.

14. Lecteur de carte à puce selon l'une quelconque des revendications précédentes, **caractérisé en ce que** le couvercle comprend des moyens de guidage et de fixation (13) qui coopèrent avec les moyens de guidage et de fixation opposés sur le support de contacts.

15. Lecteur de carte à puce selon l'une quelconque des revendications précédentes, **caractérisé en ce que** le support de contacts est un châssis.

16. Lecteur de carte à puce selon l'une quelconque des revendications précédentes, **caractérisé en ce que** des crochets d'encliquetage (170) sont formés sur le couvercle (20), et coopèrent avec des surfaces d'encliquetage (71) sur le support de contacts (2).

17. Lecteur de carte à puce selon l'une quelconque des revendications précédentes, **caractérisé en ce que** le support de contacts (2) comprend des chambres de contact accessibles à partir des côtés du châssis dans lesquelles les contacts de lecture peuvent être insérés.
